# FASCICULE DE BREVET EUROPEEN

(11) **EP 0 943 067 B1**
(45) Date de publication et mention de la délivrance du brevet: **23.04.2003**
(21) Numéro de dépôt: 98949034.7
(22) Date de dépôt: 09.10.1998
(51) Int. Cl.: F16L 58/06, C04B 7/02, C08L 63/00

(54) **PRODUIT DE REVETEMENT INTERNE D'UN ELEMENT DE CANALISATION, PROCEDE POUR SA MISE EN OEUVRE, ET ELEMENT DE CANALISATION REVETU PAR CE PRODUIT**
PRODUKT FÜR DIE INNENBESCHICHTUNG EINES KANALISATIONSELEMENTS, VERFAHREN DAFÜR, SOWIE MIT DIESEM PRODUKT AUSGEKLEIDETES KANALISATIONSELEMENT
PRODUCT FOR COATING THE INTERNAL SURFACE OF A CONDUIT, METHOD USING THE PRODUCT AND CONDUIT COATED WITH PRODUCT

(30) Priorité: 10.10.1997 FR 9712706
(43) Date de publication de la demande: 22.09.1999
(73) Titulaire: SAINT-GOBAIN PAM, 54000 Nancy (FR)
(72) Inventeur: SOUKATCHOFF, Pascal, F-54690 Lay Saint Christophe (FR)
(74) Mandataire: Moncheny, Michel
(86) Numéro de dépôt international: FR9802173
(87) Numéro de publication internationale: WO99019660

(56) Documents cités:
- DE-A- 4 137 566
- US-A- 4 500 674

## Description

La présente invention concerne un produit de revêtement interne d'un élément de canalisation, notamment métallique, comprenant une paroi interne à forte courbure.

La présente invention s'applique plus particulièrement aux canalisations d'évacuation des eaux usées en fonte ductile.

De telles canalisations transportent des milieux particulièrement agressifs qui peuvent conduire, notamment dans les pays chauds, au développement dans ces canalisations de corrosions d'origine bactérienne, par exemple de type sulfurique ou plus généralement de type acide.

Pour limiter les effets de telles corrosions, différents types de revêtement interne de protection des éléments de canalisation sont utilisés. Ainsi, on utilise, par exemple, des revêtements obtenus par durcissement de mortiers, notamment à base de ciment alumineux, ou des peintures à base d'époxy.

L'invention a pour but de fournir un revêtement particulièrement efficace et utilisable industriellement de façon économique à des fins de protection contre la corrosion d'éléments de canalisation comprenant une paroi interne à forte courbure.

A cet effet, l'invention a pour objet un produit de revêtement selon la revendication 1.

Selon des modes particuliers de réalisation, le produit de revêtement peut comprendre l'une ou plusieurs des caractéristiques suivantes :
- la charge solide comprend comme adjuvant plastifiant, en masse, entre 2 et 7 % de silice fine, notamment de granulométrie inférieure à 100 µm ;
- la charge solide comprend comme adjuvant plastifiant, en masse, entre 0,4 et 0,6 % de tripolyphosphate ;
- la charge solide comprend également comme adjuvants plastifiants du néopentylglycol à moins de 1 % en masse, et/ou de l'acétate de cuivre à moins de 0,5 % en masse ; et
- le liant comprend, en masse, environ 10 % de fumée de silice et 90 % de cendres volantes et le liquide est une solution de silicate de potassium.

L'invention a également pour objet un procédé de revêtement interne d'un élément de canalisation, notamment métallique, comprenant une paroi interne à forte courbure, à partir d'un produit de revêtement tel que défini ci-dessus, caractérisé en ce que :
- on malaxe la charge solide et le liquide du produit, avec un rapport massique liquide/liant de la charge solide de 0,35 à 0,45, pour obtenir un mélange pâteux sensiblement homogène,
- on dépose le mélange obtenu de manière sensiblement uniforme sur la paroi interne dudit élément de canalisation, et
- on laisse durcir le mélange déposé, notamment en chauffant l'élément de canalisation, pour former un revêtement interne principal.

Selon des modes particuliers de réalisation, le procédé peut comprendre l'une ou plusieurs des caractéristiques suivantes :
- l'élément de canalisation étant sensiblement cylindrique à base circulaire, on fait tourner l'élément de canalisation autour de son axe pour compacter le dépôt par centrifugation,
- ledit compactage par centrifugation est effectué après ledit dépôt du mélange sur ladite paroi interne,
- l'élément de canalisation étant sensiblement cylindrique à base circulaire, on dépose le mélange obtenu sur la paroi interne de l'élément de canalisation, par extrusion à l'aide d'une buse, et par déplacement relatif en hélice de la buse par rapport à la paroi interne pour former un dépôt en hélice du mélange sur ladite paroi interne, et
- la vitesse de rotation du tuyau lors du compactage par centrifugation est très supérieure à la vitesse de rotation du tuyau pendant le dépôt du mélange.

L'invention a aussi pour objet un élément de canalisation, notamment métallique, comprenant une paroi interne à forte courbure revêtue intérieurement par un revêtement interne obtenu par un procédé tel que défini ci-dessus, caractérisé en ce que l'épaisseur du revêtement interne principal est comprise entre environ 1,5 et 15 mm.

L'invention a également pour objet un élément de canalisation comprenant une conduite, notamment métallique, revêtue intérieurement par un revêtement intermédiaire obtenu par durcissement d'un mortier, notamment à base de ciment alumineux, délimitant une paroi interne à forte courbure, cette paroi étant revêtue par un revêtement interne principal obtenu par un procédé tel que défini ci-dessus, caractérisé en ce que l'épaisseur du revêtement principal est comprise entre environ 1,5 et 8 mm.

L'élément de canalisation peut être cylindrique à base circulaire et son diamètre intérieur peut être compris entre environ 40 et 2000 mm.

L'invention sera mieux comprise à la lecture de la description qui va suivre, donnée uniquement à titre d'exemple et faite en se référant aux dessins annexés sur lesquels :
- la figure 1 est une vue schématique, partielle, latérale, illustrant un procédé de revêtement interne d'un élément de canalisation selon l'invention, ce dernier étant représenté partiellement en coupe longitudinale,
- la figure 2 est une vue agrandie en coupe suivant la ligne II-II de la buse d'extrusion de la figure 1,
- la figure 3 est une demi-vue partielle en coupe longitudinale illustrant un élément de canalisation selon l'invention, et
- la figure 4 est une vue analogue à la figure 3 illustrant un autre élément de canalisation selon l'invention.

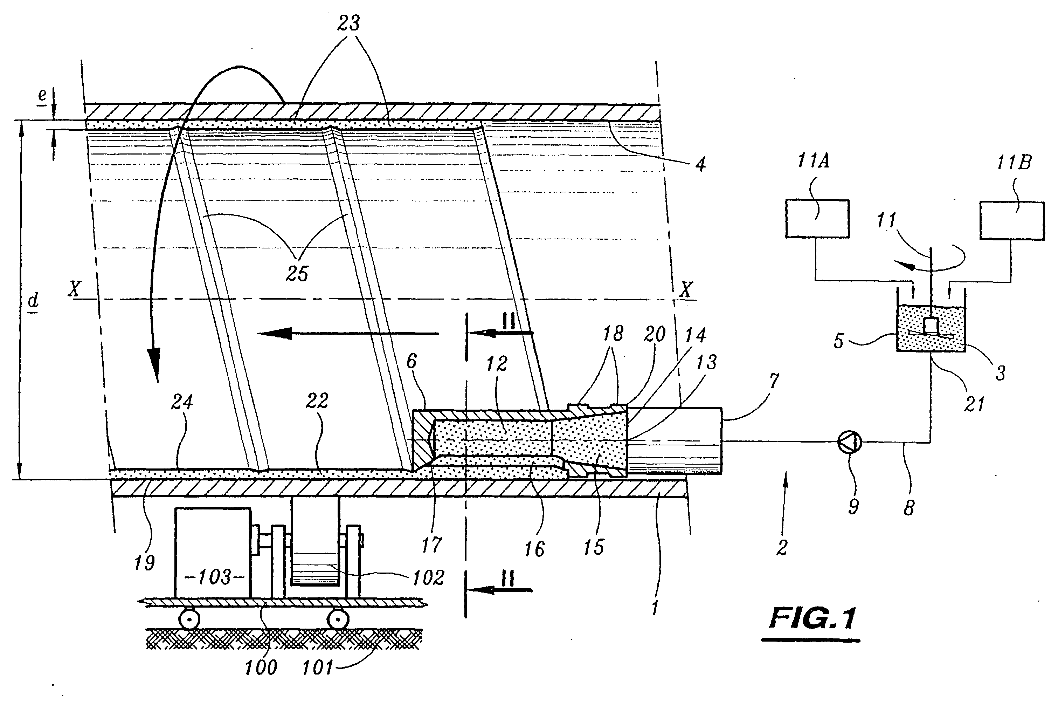

La figure 1 représente un élément de canalisation ou tuyau en fonte ductile 1 destiné à être utilisé pour l'évacuation des eaux usées, et une machine 2 de dépôt d'un mélange pâteux 3 sur la paroi interne 4 du tuyau.

Le diamètre intérieur d du tuyau 1, compris entre 40 et 2000 mm environ, est typiquement d'environ 1000 mm, et la paroi 4 est donc à forte courbure.

La machine 2 comprend essentiellement un malaxeur 5 du type de ceux utilisés pour préparer les mortiers à base de ciment, une buse 6 d'extrusion du mélange 3, des moyens 7 de support de la buse 6, une ligne 8 d'amenée du mélange 3 à la buse 6 munie d'une pompe 9, et des moyens de déplacement hélicoïdal du tuyau 1 par rapport à la buse 6. Ces moyens, de façon classique, peuvent comprendre un chariot 100, mobile longitudinalement sur le bâti fixe 101 de la machine, et muni de moyens de maintien du tuyau, dont des galets 102 couplés à un moteur 103 afin d'entraîner le tuyau 1 en rotation autour de son axe.

Le malaxeur 5 est muni de moyens 11 d'agitation et de moyens d'alimentation en charge solide 11A et en liquide 11B.

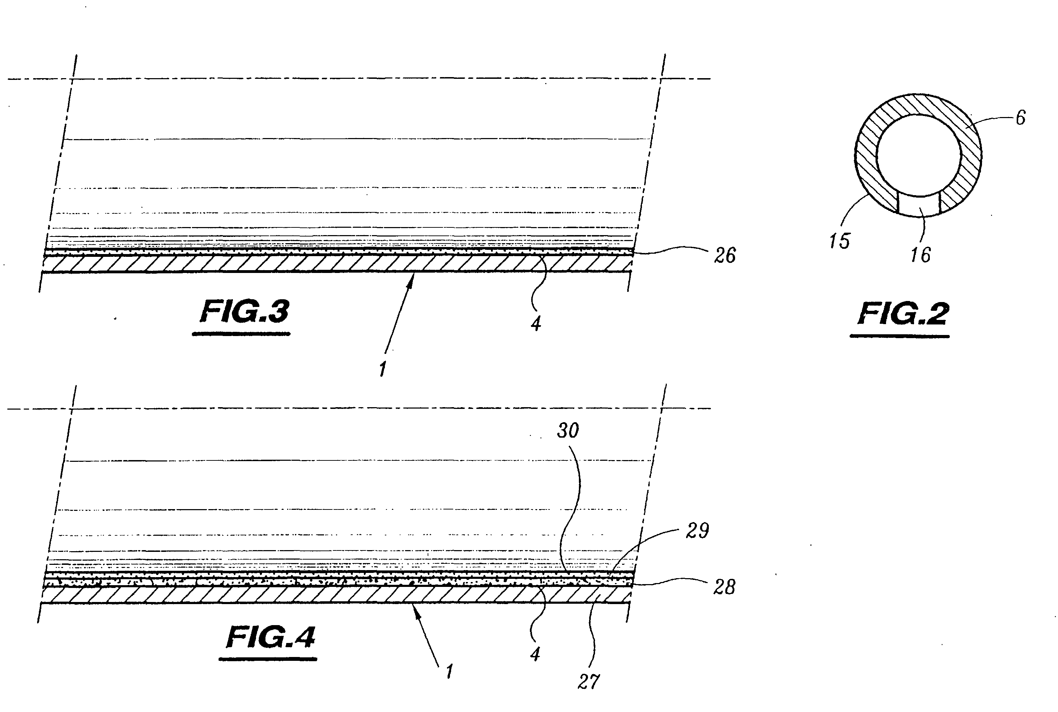

Comme illustré par les figures 1 et 2, la buse 6 est une pièce métallique de forme générale cylindrique, disposée avec son axe sensiblement parallèle à l'axe X-X du tuyau 1.

Cette buse 6 est traversée par un canal 12 débouchant, d'une part, dans une face longitudinale arrière 13 de la buse 6, par un orifice sensiblement circulaire 14 et un conduit convergent 15 d'alimentation de la buse 6 et, d'autre part, latéralement, par une fente avant 16 (à gauche sur la figure 1) de sortie de la buse 6. Cette fente 16 est d'axe longitudinal sensiblement parallèle à l'axe de la buse 6.

Comme on le voit sur la figure 1, un bord avant 17 de la buse 6, délimitant partiellement la fente 16, est incliné radialement vers l'extérieur et vers l'avant de la buse, de sorte que la fente 16 s'évase vers l'extérieur.

La buse 6 est munie à l'arrière de la fente 16 (à droite sur la figure 1) de deux collerettes annulaires 18 coaxiales à la buse 6. Ces collerettes 18, de même épaisseur radiale, sont décalées l'une par rapport à l'autre. Les collerettes 18 sont situées à faible distance d'une génératrice 19 de la paroi 4 du tuyau 1. La buse 6 est orientée de manière que la fente 16 soit en regard de la génératrice 19. La fente 16 est écartée de la paroi 4 d'une distance déterminée.

L'aire de la section de sortie de la fente 16 correspond sensiblement à l'aire de la section de l'orifice 14 de la buse 6.

Les moyens 7 de support sont de type classique pour l'homme du métier et sont reliés à l'extrémité arrière 20 de la buse 6. Ces moyens 7 de support sont adaptés pour fixer, d'une part, la position radiale de la buse 6 par rapport à la paroi 4, et la distance entre la fente 16 et la paroi 4, comme décrit ci-dessus, et, d'autre part, la position de la buse 6 par rapport au bâti fixe 101 de la machine.

La ligne 8 est reliée d'une part à l'orifice 14 d'alimentation de la buse 6 et d'autre part à une sortie 21 du malaxeur 5.

Les moyens de déplacement du tuyau 1 par rapport à la buse 6 sont adaptés, d'une part, pour que le tuyau 1 puisse se déplacer parallèlement à son axe à une vitesse constante v réglable, et, d'autre part, pour que le tuyau puisse tourner, simultanément ou non à ce déplacement axial, autour de son axe à une vitesse constante ω réglable.

Le mélange pâteux 3 est obtenu par malaxage d'un produit comprenant une charge solide et un liquide.

Le liquide est une solution de silicate de potassium de densité typiquement d'environ 1,43, et plus généralement comprise entre 1,4 et 1,5, et contenant environ 40% d'extraits secs.

La charge solide comprend du sable siliceux, un liant à prise chimique par réaction avec le liquide, des adjuvants plastifiants et des fibres de verre.

La charge solide comprend environ 23 % en masse de liant chimique, de granulométrie inférieure à 80 µm, composé d'environ 90% en masse de cendres volantes et d'environ 10% en masse de fumée de silice.

La charge solide comprend également quatre adjuvants plastifiants. Le premier adjuvant plastifiant est de la silice fine (de granulométrie inférieure à 100 µm et de diamètre moyen compris entre environ 10 et 25 µm) et représente environ 5 % en masse de la charge solide. Le deuxième adjuvant est du tripolyphosphate et représente environ 0,4 % en masse de la charge solide.

Les troisième et quatrième adjuvants plastifiants, qui sont des adjuvants auxiliaires représentant ensemble moins de 1,5 % en masse de la charge solide principale, sont composés respectivement de néopentylglycol et d'acétate de cuivre.

Le reste de la charge solide est du sable siliceux de granulométrie comprise entre 80 µm et 800 µm, auquel une faible quantité des fibres de verre a été ajoutée, typiquement de l'ordre de 0,5% en masse.

La charge solide et le liquide sont introduits dans le malaxeur 5 avec un rapport massique liquide/liant d'environ 40 %, c'est-à-dire avec un rapport massique liquide/charge solide d'environ 0,09.

La charge solide et le liquide sont mélangés par le malaxeur 5 pendant plusieurs minutes pour obtenir un mélange 3 sensiblement homogène.

Le mélange 3 est ensuite acheminé vers la buse 6. au travers de la ligne 8, par l'intermédiaire de la pompe 9.

Ce mélange 3 est déposé sur la paroi 4 par extrusion au travers de la buse 6.

Les moyens de déplacement du tuyau 1 assurent simultanément un déplacement du tuyau 1 parallèlement à son axe et une rotation du tuyau 1 autour de son axe (comme schématisé par des flèches sur la figure 1), de telle manière que la fente 16 décrit un mouvement hélicoïdal par rapport à la paroi 4 en restant à distance constante de cette dernière et avec son axe longitudinal parallèle à l'axe du tuyau 4.

La position et les déplacements relatifs de la fente 16 et de la paroi 4, par un réglage adéquat des vitesses v et ω, conduisent à la formation d'un dépôt 22 du mélange 3 sur la paroi 4 en forme de ruban en hélice.

L'épaisseur e du ruban 22 correspond sensiblement à la distance entre la fente 16 et la paroi 4, et donc à l'étendue radiale des collerettes 18. Elle est de préférence comprise entre 1,5 et 15 mm.

Les vitesses v et ω sont réglées pour que les spires successives 23 du dépôt 22 soient jointives. La surface intérieure 24 du dépôt 22 présente un sillon hélicoïdal 25 correspondant à la jonction des spires 23 successives.

Après avoir déposé le mélange 3 sur la paroi 4 comme décrit ci-dessus, on retire la buse 6 du tuyau 1 puis on fait tourner ce dernier autour de son axe, grâce aux moyens de déplacement du tuyau 1. Cette opération permet par centrifugation de compacter le dépôt 22 et de lisser la surface 24, en faisant notamment disparaître le sillon 25. De préférence, on centrifuge le dépôt 22 avec une accélération supérieure à 60 g, par exemple d'environ 100 g. La vitesse de rotation du tuyau 1 lors de la centrifugation est très supérieure à la vitesse de rotation du tuyau 1 pendant le dépôt du mélange 3.

Ensuite, on bouche le tuyau 1 à ses extrémités longitudinales pour accélérer le durcissement du mélange 3 déposé, en plaçant le tuyau 4 dans une étuve et en chauffant ce dernier entre environ 30 et 110°C, et de préférence entre 30 et 50°C. Pour cette dernière plage de température, le temps nécessaire de chauffage peut atteindre environ 10 heures et pour des températures plus élevées, le temps nécessaire de chauffage peut atteindre environ 1 heure.

La réaction de prise et de durcissement est une réaction chimique exothermique, qui fait intervenir, d'une part, le silicate de potassium du liquide, et d'autre part les silicates d'alumine et la silice de la charge solide (en particulier du liant). Il se forme alors un verre constitué essentiellement par un réseau tridimensionnel de tétraèdres SiO₄ et AlO₄. Les ions K⁺ sont localisés dans les lacunes du réseau et permettent l'équilibrage électrique du verre.

Le revêtement 26 (figure 3) obtenu par durcissement du dépôt 22, est uniforme et présente une très bonne adhérence à la paroi 4, notamment meilleure que celle des revêtements obtenus par durcissement de mortiers à base de ciment. Ce revêtement 26 présente également une très bonne résistance à l'ovalisation, aux chocs, et sa porosité est plus faible que celle de revêtements obtenus par durcissement de mortiers à base de ciment. La porosité du revêtement 26 est notablement diminuée grâce à la centrifugation du dépôt 22 décrite ci-dessus. L'épaisseur du revêtement 26 obtenu correspond sensiblement à l'épaisseur e du dépôt 22.

De plus, ce revêtement 26 présente une très bonne résistance à la corrosion en milieu acide.

Le mélange 3 obtenu présente quant à lui une bonne ouvrabilité. Ainsi, la durée d'ouvrabilité de ce mélange est d'environ 4 heures, c'est-à-dire qu'il peut s'écouler jusqu'à environ 4 heures entre le moment où la charge solide et le liquide du produit commencent à être mélangés et le moment où le mélange obtenu, maintenu sous agitation, est appliqué sur la paroi à revêtir. De plus, le dépôt 22 présente une bonne adhérence à la paroi 4 à revêtir, et il peut ainsi être mis en oeuvre de manière industrielle sur des parois à forte courbure, notamment sur les parois internes de tuyaux de diamètres intérieurs compris entre 40 et 2000 mm.

D'une manière plus générale, la charge solide du produit utilisé pour obtenir le mélange 3 peut comprendre entre 2 et 7% en masse de silice fine, entre 0,4 et 0,6 % en masse de tripolyphosphate, jusqu'à 1 % en masse de néopentylglycol, jusqu'à 0,5 % en masse d'acétate de cuivre, entre 20 et 30 % en masse de liant, le reste de la charge solide étant constitué majoritairement par du sable siliceux et par une faible quantité de fibres de verre.

De préférence, le rapport massique liquide/liant pour obtenir le mélange 3 est compris entre 0,35 et 0,45.

Bien sûr, le déplacement relatif en hélice de la buse 6 et du tuyau 1 peut être également obtenu en faisant tourner le tuyau 1 autour de son axe et en déplaçant la buse 6 parallèlement à l'axe du tuyau 1, par exemple à l'aide d'un bras télescopique.

Le dépôt du mélange 3 sur la paroi 4 peut également être assuré à l'aide d'une turbine.

La figure 4 illustre l'utilisation du produit de revêtement interne pour un tuyau de canalisation 1 comprenant une conduite en fonte ductile 27, dont la paroi interne 4 a été préalablement revêtue de manière classique par un revêtement intermédiaire 28 obtenu par durcissement d'un mortier à base de ciment alumineux. En utilisant un procédé analogue à celui décrit en regard de la figure 1, le mélange 3 obtenu à partir du produit de revêtement a été déposé sur la paroi interne 29, de forte courbure, du revêtement intermédiaire 28, puis le durcissement de ce mélange 3 déposé a conduit à la formation d'un revêtement principal 30 recouvrant intérieurement le revêtement intermédiaire 28.

L'épaisseur du revêtement principal 30 est de préférence comprise entre environ 1,5 et 8 mm.

Le revêtement 30 présente une bonne adhérence sur le revêtement intermédiaire 28, une bonne résistance aux chocs, une faible porosité, et il offre avec le revêtement intermédiaire 28 une bonne résistance à l'ovalisation, et une très bonne résistance à la corrosion acide.

## Revendications

1. Produit de revêtement interne d'un élément de canalisation (1), notamment métallique, comprenant une paroi interne (4 ; 29) à forte courbure, le produit comprenant une charge solide et un liquide, le liquide étant une solution d'un silicate alcalin et la charge solide comprenant du sable, entre 20 et 30 % en masse d'un liant à prise chimique par réaction avec le liquide, et entre 4 et 10 % en masse d'adjuvants plastifiants, la charge solide et le liquide étant destinés à être mélangés avec un rapport massique liquide/liant compris entre 0,35 et 0,45.

2. Produit de revêtement selon la revendication 1, **caractérisé en ce que** la charge solide comprend comme adjuvant plastifiant, en masse, entre 2 et 7 % de silice fine, notamment de granulométrie inférieure à 100 µm.

3. Produit de revêtement selon la revendication 1 ou 2, **caractérisé en ce que** la charge solide comprend, comme adjuvant plastifiant, en masse, entre 0,4 et 0,6 % de tripolyphosphate.

4. Produit de revêtement selon l'une quelconque des revendications 1 à 3, **caractérisé en ce que** la charge solide comprend également comme adjuvants plastifiants du néopentylglycol à moins de 1 % en masse, et/ou de l'acétate de cuivre à moins de 0,5 % en masse.

5. Produit de revêtement selon l'une quelconque des revendications 1 à 5, **caractérisé en ce que** le liant comprend, en masse, environ 10 % de fumée de silice et 90 % de cendres volantes et **en ce que** le liquide est une solution de silicate de potassium.

6. Procédé de revêtement interne d'un élément de canalisation (1), notamment métallique, comprenant une paroi interne (4 ; 29) à forte courbure, à partir d'un produit de revêtement selon l'une quelconque des revendications 1 à 5, **caractérisé en ce que** :
- on malaxe dans un malaxeur (5) la charge solide et le liquide du produit, avec un rapport massique liquide/liant de la charge solide d'environ 0,35 à 0,45, pour obtenir un mélange pâteux (3) sensiblement homogène,
- on dépose le mélange obtenu de manière sensiblement uniforme sur la paroi interne (4 ; 29) dudit élément de canalisation (1), et
- on laisse durcir le mélange (3) déposé, notamment en chauffant l'élément de canalisation (1), pour former un revêtement interne principal (27 ; 30).

7. Procédé selon la revendication 6, **caractérisé en ce que**, l'élément de canalisation (1) étant sensiblement cylindrique à base circulaire, on fait tourner l'élément de canalisation (1) autour de son axe pour compacter le dépôt (22) par centrifugation.

8. Procédé selon la revendication 7, **caractérisé en ce que** ledit compactage par centrifugation est effectué après ledit dépôt du mélange sur ladite paroi interne (4 ; 29).

9. Procédé selon l'une quelconque des revendications 6 à 8, **caractérisé en ce que** l'élément de canalisation (1) étant sensiblement cylindrique à base circulaire, on dépose le mélange obtenu sur la paroi interne (4 ; 29) de l'élément de canalisation, par extrusion à l'aide d'une buse (6), et par déplacement relatif'en hélice de la buse (6) par rapport à la paroi interne (4 ; 29) pour former un dépôt en hélice (22) du mélange (3) sur ladite paroi interne (4 ; 29).

10. Procédé selon la revendication 9, **caractérisé en ce que** la vitesse de rotation du tuyau (1) lors du compactage par centrifugation est très supérieure à la vitesse de rotation du tuyau (1) pendant le dépôt du mélange (3).

11. Elément de canalisation, notamment métallique, comprenant une paroi interne (4) à forte courbure revêtue intérieurement par un revêtement interne (26) obtenu par un procédé selon l'une quelconque des revendications 6 à 10, **caractérisé en ce que** l'épaisseur du revêtement interne principal est comprise entre environ 1,5 et 15 mm.

12. Elément de canalisation comprenant une conduite (27), notamment métallique, revêtue intérieurement par un revêtement intermédiaire (28) obtenu par durcissement d'un mortier, notamment à base de ciment alumineux, délimitant une paroi interne (29) à forte courbure, cette paroi (29) étant revêtue par un revêtement interne principal (30) obtenu par un procédé selon l'une quelconque des revendications 6 à 10, **caractérisé en ce que** l'épaisseur du revêtement principal (30) est comprise entre environ 1,5 et 8 mm.

13. Elément de canalisation selon la revendication 11 ou 12, **caractérisé en ce que** l'élément de canalisation est cylindrique à base circulaire et **en ce que** son diamètre intérieur est compris entre environ 40 et 2000 mm.

## Patentansprüche

1. Produkt zur Innenbeschichtung eines Röhrenleitungsstücks (1), insbesondere aus Metall, das eine stark gebogene Innenfläche (4; 29) umfasst, wobei das Produkt eine feste Beschickung und eine Flüssigkeit umfasst, wobei die Flüssigkeit eine alkalische Silikatlösung ist und die feste Beschickung Sand, 20 bis 30 Gew% eines durch Umsetzung mit der Flüssigkeit chemisch abbindenden Bindemittels und 4 bis 10 Gew% weichmachende Hilfsstoffe umfasst und die feste Beschickung und die Flüssigkeit in einem Gewichtsverhältnis Flüssigkeit/Bindemittel von 0,35 bis 0,45 gemischt werden sollen.

2. Beschichtungsprodukt nach Anspruch 1, **dadurch gekennzeichnet, dass** die feste Beschickung als weichmachenden Hilfsstoff, bezogen auf das Gewicht, 2 bis 7% feine Kieselerde, insbesondere mit einer Granulometrie unter 100 µm umfasst.

3. Beschichtungsprodukt nach Anspruch 1 oder 2, **dadurch gekennzeichnet, dass** die feste Beschickung als weichmachenden Hilfsstoff, bezogen auf das Gewicht, 0,4 bis 0,6% Tripolyphosphat umfasst.

4. Beschichtungsprodukt nach einem der Ansprüche 1 bis 3, **dadurch gekennzeichnet, dass** die feste Beschickung als weichmachende Hilfsstoffe zudem mindestens 1 Gew% Neopentylglycol und/oder mindestens 0,5 Gew% Kupferacetat umfasst.

5. Beschichtungsprodukt nach einem der Ansprüche 1 bis 5, **dadurch gekennzeichnet, dass** das Bindemittel, bezogen auf das Gewicht, etwa 10% Quarzstaub und 90% Flugstaub umfasst, und dadurch, dass die Flüssigkeit eine Kaliumsilikatlösung ist.

6. Verfahren zur Innenbeschichtung eines Röhrenleitungsstücks (1), insbesondere aus Metall, das eine stark gebogene Innenfläche (4; 29) umfasst, ausgehend von einem Beschichtungsprodukt nach einem der Ansprüche 1 bis 5, **dadurch gekennzeichnet, dass**:
- die feste Beschickung und die Flüssigkeit des Produkts in einem Kneter bei einem Gewichtsverhältnis Flüssigkeit/Bindemittel der festen Beschickung von etwa 0,35 bis 0,45 verknetet werden, sodass ein deutlich homogenes pastöses Gemisch (3) hergestellt wird,
- das erhaltene Gemisch auf deutlich gleichmäßige Weise auf die Innenfläche (4; 29) des Röhrenleitungsstücks (1) aufgebracht wird und
- man das aufgebrachte Gemisch (3) insbesondere durch Erhitzen des Röhrenleitungsstücks (1) aushärten lässt, damit sich eine Hauptinnenschicht (27; 30) bildet.

7. Verfahren nach Anspruch 6, **dadurch gekennzeichnet, dass** das Röhrenleitungsstück (1) deutlich zylindrisch mit. kreisförmiger Grundfläche ist und man das Röhrenleitungsstück (1) um seine Achse drehen lässt, um die Ablagerung (22) durch Zentrifugation zu verdichten.

8. Verfahren nach Anspruch 7, **dadurch gekennzeichnet, dass** die Verdichtung durch Zentrifugation nach der Ablagerung des Gemischs auf der Innenfläche (4; 29) erfolgt.

9. Verfahren nach einem der Ansprüche 6 bis 8, **dadurch gekennzeichnet, dass** das Röhrenleitungsstück (1) deutlich zylindrisch mit kreisförmiger Grundfläche ist und man das erhaltene Gemisch auf der Innenfläche (4; 29) des Röhrenleitungsstücks durch Extrusion mit einer Spritzdüse (6) und durch schraubenförmiges Versetzen der Spritzdüse (6) gegenüber der Innenfläche (4; 29) ablagert, sodass eine schraubenförmige Ablagerung (22) des Gemischs (3) auf der Innenfläche (4; 29) hergestellt wird.

10. Verfahren nach Anspruch 9, **dadurch gekennzeichnet, dass** die Rotationsgeschwindigkeit der Röhre (1) beim Verdichten durch Zentrifugation sehr viel größer ist als die Rotationsgeschwindigkeit der Röhre (1) beim Ablagern des Gemischs (3).

11. Röhrenleitungsstück, insbesondere aus Metall, das eine stark gebogene Innenfläche (4; 29) umfasst und im Inneren durch eine Innenbeschichtung (26) beschichtet ist, die durch ein Verfahren nach einem der Ansprüche 6 bis 10 erhalten wird, **dadurch gekennzeichnet, dass** die Dicke der Hauptinnenbeschichtung etwa 1,5 bis 15 mm ist.

12. Röhrenleitungsstück, umfassend ein Leitungsrohr (27), insbesondere aus Metall, das im Inneren durch eine Zwischenbeschichtung (28) beschichtet ist, erhalten durch Erhärten eines Mörtels, insbesondere auf der Basis von Aluminat-Zement, die eine Innenfläche (29) mit starker Krümmung abgrenzt, wobei die Fläche (29) durch eine Hauptinnenbeschichtung (30) beschichtet ist, die durch ein Verfahren nach einem der Ansprüche 6 bis 10 erhalten wird, **dadurch gekennzeichnet, dass** die Dicke der Hauptbeschichtung (30) etwa 1,5 bis 8 mm beträgt.

13. Röhrenleitungsstück nach Anspruch 11 oder 12, **dadurch gekennzeichnet, dass** das Röhrenleitungsstück zylindrisch mit kreisförmiger Grundfläche ist, und dadurch, dass sein Innendurchmesser etwa 40 bis 2000 mm ist.

## Claims

1. Product for coating the inside of a tubing section (1), particularly made of metal, comprising an inner wall (4; 29) with a strong curvature, the product comprising a solid charge and a liquid, the liquid being a solution of an alkali metal silicate and the solid charge containing sand, between 20 and 30% by mass of a binder which sets chemically by reacting with the liquid, and between 4 and 10% by mass of plasticising adjuvants, the solid charge and the liquid being intended to be mixed in a mass ratio of liquid to binder of between 0.35 and 0.45.

2. Coating product according to claim 1, **characterised in that** the solid charge contains, as plasticising adjuvant, between 2 and 7% by mass of fine silica, notably with a particle size of less than 100 µm.

3. Coating product according to claim 1 or 2, **characterised in that** the solid charge contains, as plasticising adjuvant, between 0.4 and 0.6% by mass of tripolyphosphate.

4. Coating product according to one of claims 1 to 3, **characterised in that** the solid charge also contains, as plasticising adjuvants, less than 1% by mass of neopentylglycol and/or less than 0.5% by mass of copper acetate.

5. Coating product according to one of claims 1 to 5, **characterised in that** the binder comprises about 10% by mass of silica fume and 90% by mass of flue dust and the liquid is a potassium silicate solution.

6. Process for coating the inside of a tubing section (1), particularly made of metal, comprising a strongly curved inner wall (4; 29), from a coating product according to any one of claims 1 to 5, **characterised in that**:
- the solid charge and the liquid of the product are kneaded together in a kneader (5), in a mass ratio of liquid to binder in the solid charge of about 0.35 to 0.45, to obtain a substantially homogeneous paste mixture (3),
- the mixture obtained is deposited substantially uniformly over the inner wall (4; 29) of said tubing section (1), and
- the deposited mixture (3) is allowed to harden, notably by heating the tubing section (1), to form a main internal coating (27; 30).

7. Process according to claim 6, **characterised in that**, the tubing section (1) being substantially cylindrical with a circular base, the tubing section (1) is rotated about its axis to compact the deposit (22) by centrifugation.

8. Process according to claim 7, **characterised in that** the compacting by centrifugation is carried out after the mixture has been deposited on said inner wall (4; 29).

9. Process according to any one of claims 6 to 8, **characterised in that**, the tubing section (1) being substantially cylindrical with a circular base, the mixture obtained is deposited on the inner wall (4; 29) of the tubing section by extrusion through a nozzle (6) and by relative helical displacement of the nozzle (6) relative to the inner wall (4; 29), to form a helical deposit (22) of the mixture (3) on said inner wall (4; 29).

10. Process according to claim 9, **characterised in that** the speed of rotation of the tube (1) during the compacting by centrifugation is much higher than the speed of rotation of the tube (1) during the depositing of the mixture (3).

11. Tubing section, notably made of metal, comprising an inner wall (4) with a strong curvature, coated on the inside with an inner coating (26) obtained by a process according to any one of claims 6 to 10, **characterised in that** the thickness of the main inner coating is between about 1.5 and 15 mm.

12. Tubing section comprising a conduit (27), particularly made of metal, coated on the inside with an intermediate coating (28) obtained by hardening a mortar, notably based on aluminous cement, defining an inner wall (29) with a strong curvature, this wall (29) being coated with a main inner coating (30) obtained by a process as defined in any one of claims 6 to 10, **characterised in that** the thickness of the main coating (30) is between about 1.5 and 8 mm.

13. Tubing section according to claim 11 or 12, **characterised in that** the tubing section is cylindrical with a circular base and its internal diameter is between about 40 and 2000 mm.
